Europäisches Patentamt

European Patent Office

Office européen des brevets

(19)

(11) Veröffentlichungsnummer: **0 286 835 B1**

## (12) EUROPÄISCHE PATENTSCHRIFT

(45) Veröffentlichungstag der Patentschrift: **15.01.92**

(51) Int. Cl.⁵: **H04B 1/58,** H04Q 11/04

(21) Anmeldenummer: **88103805.3**

(22) Anmeldetag: **10.03.88**

(54) **Verfahren und Schaltungsanordnung zur Einstellung der Teilnehmerleitungs-Nachbildungsimpedanzen von programmierbaren Gabelschaltung.**

(30) Priorität: **14.04.87 DE 3712662**

(43) Veröffentlichungstag der Anmeldung:
**19.10.88 Patentblatt 88/42**

(45) Bekanntmachung des Hinweises auf die
Patenterteilung:
**15.01.92 Patentblatt 92/03**

(84) Benannte Vertragsstaaten:
**AT BE CH DE FR GB GR IT LI LU NL SE**

(56) Entgegenhaltungen:
**EP-A- 0 211 675**
**GB-A- 2 159 022**

**ELECTRONICS, Band 55, Nr. 9, 5. Mai 1982, Seiten 113-118, New York, US; R. APFEL et al.: "Signal-processing chips enrich telephone line-card architecture"**

(73) Patentinhaber: **SIEMENS AKTIENGESELL- SCHAFT**
**Wittelsbacherplatz 2**
**W-8000 München 2(DE)**

(72) Erfinder: **Lechner, Robert, Dipl.-Ing.**
**Dr. Bilcik Gasse 16**
**A-Sankt Pölten(AT)**
Erfinder: **Malek, Moni, M.A.**
**Bavariastrasse 3**
**W-8000 München 2(DE)**

**Beschreibung**

Die Erfindung betrifft ein Verfahren und eine Schaltungsanordnung zur Einstellung der Teilnehmerleitungs-Nachbildungsimpedanzen von programmierbaren Gabelschaltungen für den Zweidraht-/Vierdraht-Übergang, die Bestandteil von in einem Teilnehmeranschlußmodul einer digitalen Zeitmultiplex-Fernmelde-Vermittlungsstelle zusammengefaßten und unter dem Steuereinfluß einer modulindividuellen Steuerung stehenden Teilnehmeranschlußleitungen sind, unter Verwendung einer Einrichtung zur einstellbaren Nachbildungsimpedanzrealisierung.

Durch Reflexionen an Stoßstellen verschiedener Leitungsabschnitte in Fernsprechverbindungen können Echos entstehen. Der Hauptteil der Echos entsteht dabei in den Gabelschaltungen, die Zweidraht-/Vierdraht-Übergänge realisieren. Wenn zu den Echos an teilnehmerfernen Gabelschaltungen, die für sich schon zu einer erheblichen Verringerung der Qualität der Fernsprechverbindung führen können, auch noch Echos an teilnehmernahen Gabelschaltungen kommen und somit Mehrfachreflexionen entstehen, ergibt sich für den hörenden Teilnehmer ein Hohlklangeffekt. Wenn sich Echos verschiedener Leitungsabschnitt überlagern, können außerdem Instabilitäten entstehen, die sich in Pfeiftönen äußern. Der letztgenannte Effekt, der in erster Linie bei Fernverbindungen auftreten kann, läßt sich durch das Einfügen von Dämpfungsgliedern bis zu einem gewissen Grade beherrschen. Eine Grenze für diese Maßnahme liegt da, wo die Erhöhung der Dämpfung zu einer nicht mehr hinzunehmenden Verringerung der Lautstärke führt.

In solchen Fällen kommt der Einsatz von Echosperren in Frage, also Einrichtungen, durch die im Sendeweg einer Vierdrahtverbindung ein Dämpfungsglied mit hoher Dämpfung wirksamgeschaltet wird, wenn der Sprachpegel im Empfangsweg einen bestimmten Wert überschreitet. Bei einer besonderen Ausführungsform dieser Echosperren, den sogenannten Differentialechosperren, wird das Dämpfungsglied wieder weggeschaltet, wenn der Sendepegel den Empfangspegel übersteigt, so daß Zwischenbemerkungen eines im Augenblick hörenden Fernsprechteilnehmers nicht ebenfalls durch die Echosperre unterdrückt werden, wenn sie nur laut genug sind.

Es kommt ferner der Einsatz von Echokompensatoren in Frage, deren Prinzip darin besteht, mit Hilfe eines Filters, das die Übertragungseigenschaften des Echopfades nachbildet, aus dem Nutzsignal ein Ebenbild des Echos als Kompensationssignal abzuleiten, das vom tatsächlichen Echo subtrahiert wird und dieses damit auslöscht.

Die Ursache von Reflexionen an Gabelschaltungen liegt in der nicht exakten Nachbildung der Impedanz der an die Gabelschaltung angeschlossenen Zweidrahtleitung durch ein Bestandteil der Gabelschaltung darstellendes Nachbildungsnetzwerk.

Um zu vermeiden, daß in jedem Einzelfall einer Teilnehmeranschlußleitung eine gesonderte Abstimmung des Nachbildungsnetzwerkes vorgenommen werden muß, wird in bekannten Fällen mit Kompromißwerten für die Nachbildungsimpedanz gearbeitet, wobei lediglich zwischen Werten für lange und für kurze Teilnehmeranschlußleitungen unterschieden wird. Sofern es sich bei der Teilnehmeranschlußleitung um eine pupinisierte Anschlußleitung handelt, kann auch dieser Umstand durch einen Standardwert für pupinisierte Teilnehmeranschlußleitungen berücksichtigt werden.

Bei digitalen Fernsprechvermittlungssystemen erfolgt in der Praxis diese Einstellung entweder manuell auf den Teilnehmeranschlußschaltungen, zu denen die Gabelschaltungen gehören, oder aber durch einen Softwarebefehl, der vom Bedienplatz des Vermittlungssystems aus gegeben wird. Es müssen hierzu allerdings sowohl bei der Planung von neuen Vermittlungsstellen als auch beim Anschluß später hinzugekommener Teilnehmeranschlußleitungen Daten über die physikalischen Eigenschaften der betroffenen Teilnehmeranschlußleitungen bekannt sein, also Angben darüber ob es sich um lange oder kurze Leitungen handelt und ob diese pupinisiert sind oder nicht.

Bei einer Schaltungsanordnung der eingangs vorausgesetzten Art (EP-A-0 211 675) wird eine Grundeinstellung der Nachbildungsimpedanz durch das Wartungspersonal von zentraler Stelle aus vorgenommen. Durch eine zentrale Steuereinheit wird diese Grundeinstellung periodisch aktualisiert. Nach welchen Kriterien und in welcher Art und Weise dies geschieht, ist in der zitierten Patentanmeldung nicht angegeben.

Ferner ist für sich eine adaptive Gabelschaltung bekannt (GB-A-2 159 022), bei der die Einstellgröße für das Nachbildungsnetzwerk aus dem Ergebnis einer Empfangs- und Sendesignal einbeziehenden Korrelationsrechnung ermittelt wird.

Die Aufgabe der Erfindung besteht darin, ein Verfahren und eine Schaltungsanordnung anzugeben, durch die im Zusammenhang mit einer digitalen Zeitmultiplex-Fernmelde-Vermittlungsstelle und unter der Voraussetzung einer Zusammenfassung der Teilnehmeranschlußschaltungen zu einem Teilnehmeranschlußmodul die Möglichkeit einer adaptiven Einstellung der Nachbildung der Teilnehmerleitungsimpedanzen gegeben ist.

Erfindungsgemäß wird die Aufgabe mit einem Verfahren der eingangs genannten Art gelöst, das

EP 0 286 835 B1

dadurch gekennzeichnet ist, daß durch die modulindividuelle Steuerung über eine programmierbare Schnittstellenschaltung in der Weise auf den Sende- und Empfangszweig der die Teilnehmeranschlußschaltungen mit dem Koppelnetz der Fernsprechvermittlungsstelle verbindenden wenigstens einen Vierdraht-Zeitmultiplex-Leitung zugegriffen wird, daß individuell für die einzelnen Teilnehmeranschlußschaltungen jeweils im Zuge einer zu einer betreffenden Teilnehmeranschlußschaltung bzw. zu dem über eine Teilnehmeranschlußleitung daran angeschlossenen Teilnehmerendgerät bestehenden Fernmeldeverbindung in beliebigen aber gegenüber der Länge der Abtastpulsrahmen großen Abständen ein in dem der Verbindung zugeteilten Zeitschlitz auf dem Empfangszweig der wenigstens einen Vierdraht-Zeitmultiplex-Leitung auftretendes PCM-Wort und jeweils um eine durch ein durch Reflexion an der Gabelschaltung der Teilnehmerschlußschaltung entstehendes Echosignal maßgeblichen Laufzeit entsprechenden Anzahl von Abtastpulsrahmen später während entsprechender Zeitschlitze mehrerer aufeinanderfolgender Abtastpulsrahmen auf dem Sendezweig auftretende PCM-Worte aufgenommen werden, ein solches vom Empfangszweig der Vierdraht-Zeitmultiplex-Leitung aufgenommenes PCM-Wort, dessen Amplitude einen vorgegebenen Schwellwert nicht erreicht und eine solche Gruppe aufeinanderfolgender vom Sendezweig der Vierdraht-Zeitmultiplex-Leitung aufgenommener PCM-Worte, deren Leistungsmittelwert größer als ein vorgegebener Bruchteil der Leistung des genannten vom Empfangszweig aufgenommenen PCM-Wortes ist, unberücksichtigt gelassen wird, im übrigen aber aus nach einem N-maligen Zyklus aufgrund der genannten Bewertung berücksichtigten PCM-Worten bzw. Gruppen von PCM-Worten ein Summenwert von Kreuzkorrelationskoeffizienten ermittelt wird, daß durch die modulindividuelle Steuerung ferner geprüft wird, ob zu diesem Zeitpunkt die betreffende Fernmeldeverbindung noch besteht, und daß, sofern dies der Fall ist, je nachdem ob der Summenwert der Kreuzkorrelationskoeffizienten annähernd null oder kleiner oder größer als ein Schwellwert ist, die Einstellung der Nachbildungsimpedanz der Gabelschaltung der betroffenen Teilnehmeranschlußschaltung unverändert gelassen, oder eine Veränderung zum nächst kleineren oder zum nächst größeren Wert veranlaßt wird.

Beim erfindungsgemäßen Verfahren wird der Umstand ausgenutzt, daß für jede Teilnehmeranschlußleitung eine Teilnehmeranschlußschaltung vorhanden ist, in der auch die Zweidraht-/Vierdraht-Umsetzung vorgenommen wird, und daß demnach die Leitungsimpedanz einer bestimmten Leitung als über lange Zeit unverändert angenommen werden kann. Die erfindungsgemäße Schaltungsanordnung ist dementsprechend so ausgelegt, daß sie relativ langsam eine Annäherung an den optimalen Impedanzwert erreicht, dafür aber mit relativ wenigen und einfachen Schaltungsmitteln auskommt.

Gemäß einer Ausgestaltung der Erfindung wird bei der Adaption so vorgegangen, daß sie bei verschiedenen Teilnehmeranschlüssen nacheinander, d.h. also nicht im Zeitmultiplex-Betrieb durchgeführt wird, so daß der Bedarf an RAM-Speicherplatz, den die gruppenindividuelle Steuerung im Hinblick auf die adaptive Einstellung benötigt, kleingehalten werden kann.

Gemäß einer anderen Ausgestaltung des erfindungsgemäßen Verfahrens wird die Schwellenbewertung der PCM-Worte durch die programmierbare Schnittstelle bewirkt, die auch die eventuelle Einspeicherung der PCM-Worte veranlaßt.

Noch eine andere Ausgestaltung der Erfindung geht dahin, die jeweils ermittelten gültigen Worte für Nachbildungsimpedanzen durch die modulindividuelle Steuerung zu speichern und auf Aufforderung durch eine übergeordnete Steuerung hin an diese zu melden, die sie dann zur Anzeige bringt.

Eine weitere Ausgestaltung der Erfindung betrifft eine Schaltungsanordnung zur Durchführung des erfindungsgemäßen Verfahrens, die dadurch gekennzeichnet ist, daß sie eine programmierbare Schnittstellenschaltung aufweist, die mit einer Ablaufsteuerung versehen ist, durch die, angereizt durch die modulindividuelle Steuerung, die Abfrage der genannten auf dem Empfangszweig und dem Sendezweig der Viedraht-Zeitmultiplex-Leitung auftretenden PCM-Worte vorgenommen wird, sowie einen Speicher enthält, der diese PCM-Worte aufnimmt und sie auf eine Aufforderung durch die modulindividuelle Steuerung hin an diese weitergibt.

Bei dieser Schaltungsanordnung entfällt für die modulindividuelle Steuerung die Notwendigkeit Echtzeitanforderungen bezüglich der Aufnahme der PCM-Worte zu erfüllen, sie kann vielmehr die Verarbeitung der PCM-Worte auch erst dann vornehmen, wenn vorrangige, mit dem Vermittlungsbetrieb zusammenhängende Aufgaben abgewickelt sind.

Bei einer erfindungsgemäßen Ausführungsform der vorgenannten Schaltungsanordnung wird für den PCM-Wort-Austausch zwischen dem Speicher der programmierten Schnittstelle und der modulindividuellen Steuerung die in erster Linie für den Informationsaustausch zwischen der modulindividuellen Steuerung und der übergeordneten Steuerung der Vermittlungsstelle vorgesehene Informationsleitung benutzt, wodurch sich eine Aufwandsverringerung ergibt.

Eine alternative Ausführungsvariante der erfindungsgemäßen Schaltungsanordnung ist dadurch gekennzeichnet, daß die erwähnte Ablaufsteuerung und der erwähnte Speicher nicht Bestandteil der Schnittstellenschaltung sondern Bestandteil der einzelnen Teilnehmeranschlußschaltungen sind.

3

Nachstehend wird die Erfindung anhand eines Ausführungsbeispiels unter Bezugnahme auf eine Zeichnung näher erläutert.

In der Zeichnung zeigen:

FIG. 1    Das Blockschaltbild der erfindungsgemäßen Schaltungsanordnung.

FIG. 2    Die Schnittstellenschaltung der erfindungsgemäßen Schaltungsanordnung in detaillierterer Darstellung.

FIG. 3    Ein Impulsdiagramm zur Veranschaulichung der Echoverhältnisse bei Fehlanpassung.

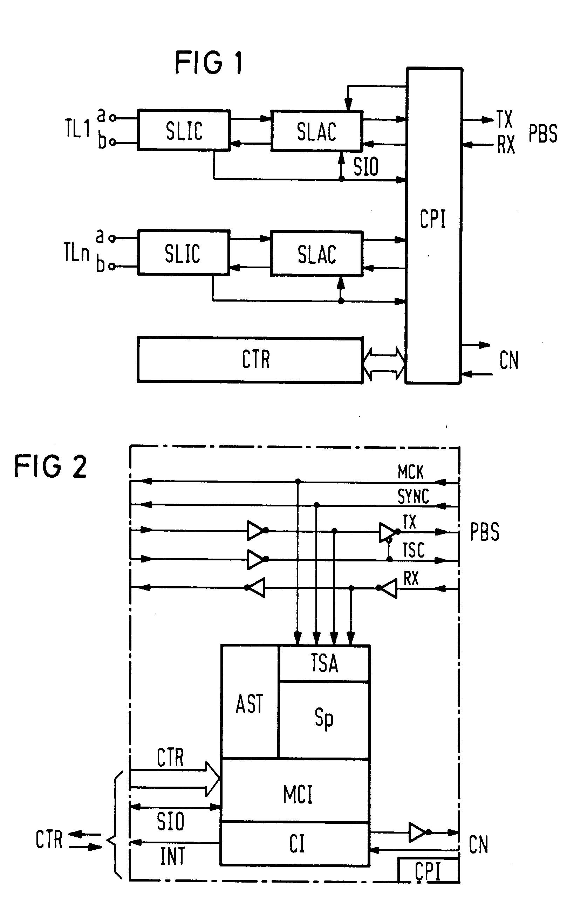

In der Fig. 1 ist eine Teilnehmeranschlußmodul für den Anschluß von n Teilnehmeranschlußleitungen TL1 bis TLn gezeigt. Die Baugruppe umfaßt teilnehmerleitungsindividuelle Teilnehmeranschlußschaltungen, die hier in Bestandteile SLIC und SLAC gegliedert sind. Bei den Teilen SLIC der Teilnehmeranschlußschaltungen handelt es sich um diejenigen, die von den sogenannten BORSCHT-Funktionen die Funktionen der Speisung (Battery), Überspannungsschutz (Overvoltage), Rufeinspeisung (Ringing), Signale, Überwachung (Signals, Superversion) und der Prüfung (Testing) realisieren, wogegen die Teile SLAC der Teilnehmeranschlußschaltungen der Realisierung der Gabelschaltung, also des Zweidraht-Vierdraht-Übergangs (Hybrid) und der Analog-Digital-Wandlung bzw. Digital-Analog-Wandlung und Filterung (Coding) dienen. Mit Hilfe eines Signalprozessors erfolgt in diesem Teil SLAC auch die Realisierung der adaptiven Nachbildungsimpedanz.

Über eine Schnittstellenschaltung CPI stehen die genannten Teilnehmeranschlußschaltungen mit einer Vierdraht-Zeitmultiplex-Leitung PBS in Verbindung, die der Sprachsignalübertragung von und zu dem Koppelnetz der Vermittlungsstelle dient, zu der die insoweit beschriebene Teilnehmeranschlußbaugruppe gehört. Die Vierdraht-Leitung hat einen Sendezweig TX und einen Empfangszweig RX. In der Praxis können auch mehr als eine solcher Zeitmultiplex-Leitungen vorgesehen sein.

Die Teilnehmeranschlußschaltungen SLIC/SLAC stehen unter dem Steuereinfluß einer modulindividuellen Steuerung CTR. Die Kommunikation dieser Steuerung mit den Teilnehmeranschlußschaltungen erfolgt ebenfalls über die Schnittstelle CPI, dasselbe gilt für die Kommunikation der modulindividuellen Steuerung mit einer zentralen Steuerung der Vermittlungsstelle, wobei der Signalaustausch beispielsweise über ein gesondertes Steuernetzwerk CN erfolgt.

Die erwähnte Schnittstelle CPI ist erfindungsgemäß in der Weise programmierbar, daß die modulindividuelle Steuerung CTR Zugriff zum Sendezweig TX und zum Empfangszweig RX der Vierdraht-Zeitmultiplex-Leitung PBS hat. Sie ist zu diesem Zweck, wie das Ausführungsbeispiel gemäß Fig. 2 zeigt unter anderem mit einer Ablaufsteuerung AST und einem Speicher Sp versehen. Weitere Bestandteile der Schnittstellenschaltung CPI gemäß Fig. 2 sind eine Mikrocomputerschnittstelle MCI, über die die Verbindung zur gruppenindividuellen Steuerung CTR läuft, sowie eine Schnittstelle CI, über die eine Verbindung zum Steuernetzwerk CN bzw. zu der zentralen Steuerung der Vermittlungsstelle besteht. Eine Einrichtung TSA der Schnittstelle steht mit den durch die Teile SLAC der Teilnehmeranschlußschaltungen vorzunehmenden Zeitschlitzzuteilung in Zusammenhang.

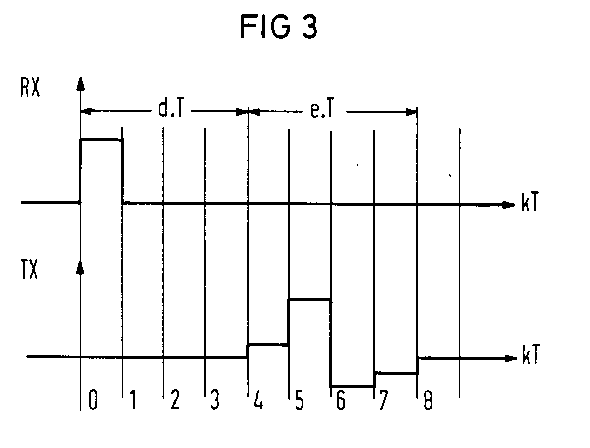

Bei einer automatischen Einstellung der Nachbildungsimpedanz der Gabelschaltung einer bestimmten Teilnehmeranschlußschaltung veranlaßt nun die Ablaufsteuerung AST der programmierbaren Schnittstellenschaltung CPI, angereizt durch die modulindividuelle Steuerung CTR im Zuge einer zu dem an die betreffende Teilnehmeranschlußschaltung über die Teilnehmeranschlußleitung TL angeschlossenen Teilnehmerendgerät durchgeschalteten Fernsprechverbindung die Aufnahme von im Zeitschlitz des der Verbindung zugeteilten Zeitkanals auf dem Empfangszweig RX jeweils auftretenden PCM-Worten in den Speicher Sp der Schnittstellenschaltung. Diese Aufnahme erfolgt nicht für jeden Abtastwert sondern im gegenüber dem Abtastpulsrahmen von beispielsweise 125 $\mu$s großen Abständen von beispielsweise 20 ms. Solche auf dem Empfangszweig auftretende PCM-Worte haben, wie in Fig. 3 veranschaulicht, durch Reflexion an der im Teilnehmeranschlußschaltungsteil SLAC enthaltenen Gabelschaltung bei Fehlanpassung auf dem Sendezweig TX mit einer Verzögerung von mehreren Abtastpulsrahmen (4 beim Beispiel gemäß Fig.3) das Auftreten von Echosignalen zur Folge, die sich über mehrere Abtastpulsrahmen hinweg (ebenfalls 4 beim Beispiel gemäß Fig. 3) erstrecken.

Die Ablaufsteuerung AST der Schittstellenschaltung CPI veranlaßt also jeweils um die genannte Verzögerungszeit später und während der entsprechenden Zeitschlitze mehrerer, hier also 4 aufeinanderfolgender Abtastpulsrahmen die Aufnahme der auf dem Sendezweig TX der Vierdraht-Zeitmultiplex-Leitung auftretenden PCM-Worte.

Auf Aufforderung durch die modulindividuelle Steuerung CTR hin werden diese PCM-Worte an diese Steuerung übergeben. Eine solche Zusammenarbeit zwischen der Ablaufsteuerung AST der programmierbaren Schnittstelle und der modulindividuellen Steuerung CTR hat, wie angegeben, den Vorteil, daß die modulindividuelle Steuerung bei der Abwicklung vorrangiger Aufgaben durch den Adaptionsprozess nicht behindert ist.

Die modulindividuelle Steuerung CTR prüft nun, ob die vom Empfangszweig RX der Zeitmultiplex-Vierdraht-Leitung aufgenommenen PCM-Worte in ihrer Amplitude einen vorgegebenen Schwellwert erreichen. Sofern dies nicht der Fall ist, wird das betreffende PCM-Wort unberücksichtigt gelassen. Die Berücksichtigung von PCM-Worten mit unterhalb dieser Schwelle liegenden Amplituden würde zu Ergebnissen führen, die wegen des Rauschens unzutreffend sind.

Auch die erwähnten Gruppen von PCM-Worten, die von dem Sendezweig TX der Vierdraht-Zeitmultiplex-Leitung in aufeinanderfolgenden Pulsrahmen aufgenommen werden, werden einer Bewertung unterworfen. Wenn der Leistungsmittelwert dieser PCM-Wort größer als ein vorgegebener Bruchteil der Leistung des genannten vom Empfangszweig aufgenommenen PCM-Worts ist, führt dies auch dazu, daß dieses PCM-Wort und die entsprechenden Echosignale unberücksichtigt gelassen werden. Es ist somit sichergestellt, nur solche vom Sendezweig aufgenommenen PCM-Worte ausgewertet werden, bei denen es sich tatsächlich um Echosignale eines auf dem Empfangszweig angekommenen PCM-Wortes und nicht um ein Gemisch aus Echo und Nutzsignal handelt. Aus den aufgrund dieser Bewertung verbleibenden, durch N-malige Wiederholung des geschilderten Zugriffs zu der Vierdraht-Zeitmultiplex-Leitung gewonnenen PCM-Worten, wobei z.B. N = 1000 ist, wird dann durch die modulindividuelle Steuerung CTR ein Summenwert der Kreuzkorrelationskoeffizienten gemäß der Formel

$$K_i = \frac{1}{N} \sum_{K=1}^{N} RX(k) \quad TX(k,i),$$

gebildet, sofern zu diesem Zeitpunkt die Verbindung überhaupt noch besteht. Ist letzteres nicht der Fall, dann bleiben die Ermittlungsergebnisse unberücksichtigt. Ein solcher Summenwert gibt das Maß der Abhängigkeit eines auf dem Empfangszweig RX der Vierdraht-Zeitmultiplex-Leitung ankommenden PCM-Wortes mit den im Anschluß daran auf dem Sendezweig TX der Zeitmultiplex-Leitung auftretenden PCM-Worten an. Ergibt sich $K_i = 0$, so bedeutet dies, daß eine Korrelation nicht besteht, die auf dem Sendezweig auftretenden PCM-Worte also keine Echos des betrachteten auf dem Empfangszweig aufgetretenen PCM-Wortes sind und daß das Nachbildungsnetzwerk einen im Hinblick auf die vollständige Entkopplung von Sendezweig und Empfangszweig der Vierdraht-Leitung aufweist. Demnach bleiben die bestehenden Werte des Nachbildungsnetzwerkes unverändert.

Hat $K_i$ einen Wert der kleiner als ein Schwellwert ist, dann veranlaßt die modulindividuelle Steuerung CTR eine Veränderung der Nachbildungsimpedanz zum nächstkleineren Wert, hat dagegen $K_i$ einen Wert der größer als ein Schwellwert ist, dann wird die Einstellung des nächstgrößeren Wertes der Nachbildungsimpedanz veranlaßt.

Das Auslesen der im Speicher Sp der programmierbaren Schnittstellenschaltung CPI befindlichen PCM-Worte an die modulindividuelle Steuerung CTR erfolgt über dieselbe serielle Datenleitung SIO, die auch für einen Informationsaustausch zwischen der modulindividuellen Steuerung und der zentralen Steuerung über die Schnittstelle CPI ausgenutzt wird. Die Aufnahme von PCM-Worten, die mit einer anderen Verbindung bzw. einer anderen Teilnehmeranschlußschaltung in Zusammenhang stehen, erfolgt erst, wenn die vorstehend erläuterten Prozeduren vollständig abgewickelt sind. Der Bedarf an RAM-Speicherplatz in der modulindividuellen Steuerung läßt sich dadurch relativ klein halten.

Gemäß Fig. 2 ist davon ausgegangen worden, daß zur Vermeidung von Echtzeitproblemen für die Aufnahme von PCM-Worten bei der modulindividuellen Steuerung die Schnittstellenschaltung CPI eine Ablaufsteuerung AST und einen Speicher Sp aufweist. Die in den Baugruppen bewirkten Steuer- bzw. Speicherfunktionen können jedoch auch in den Teilen SLAC der Teilnehmeranschlußschaltungen realisiert werden, so daß eine Umwandlung der PCM-Worte von nichtlinearer Codedarstellung, wie sie bei der Übertragung auf der Vierdraht-Leitung vorliegt, in lineare Codedarstellung, wie sie für die Bildung der Kreuzkorrelationskoeffizienten benötigt wird, in diesen Teilnehmeranschlußleitungsteilen SLAC abgewickelt werden können, so daß, da dort solche Umwandlungsprozeduren, die aber nichts mit der Impedanzeinstellung zu tun haben, ohnehin abgewickelt werden, kein großer Mehraufwand entsteht.

Bei der beschriebenen Ausführungsvariante wird der Amplitudenvergleich der auf dem Empfangszweig der Vierdraht-Zeitmultiplex-Leitung auftretenden für das Teilnehmerendgerät bestimmten PCM-Worte mit einem Schwellwert durch die modulindividuelle Steuerung vorgenommen.

Wie angedeutet kann dieser Vergleich auch in der programmierbaren Schnittstelle vorgenommen werden, die dann auch, sofern der Schwellwert überschritten wird, die Einspeicherung des betreffenden PCM-Wortes veranlaßt.

5

**Patentansprüche**

1. Verfahren zur Einstellung der Teilnehmerleitungs-Nachbildungsimpedanz von programmierbaren Gabelschaltungen für den Zweidraht-/Vierdraht-Übergang, die Bestandteil von in einem Teilnehmeranschlußmodul einer digitalen Zeitmultiplex-Fernmelde-Vermittlungsstelle zusammengefaßten und unter dem Steuereinfluß einer modulindividuellen Steuerung (CTR) stehenden Teilnehmeranschlußschaltung (SLiC/SLAC) sind, unter Verwendung einer Einrichtung zur einstellbaren Nachbildungsimpedanzrealisierung,
**dadurch gekennzeichnet,**
daß durch die modulindividuelle Steuerung (CTR) über eine programmierbare Schnittstellenschaltung (CPI) in der Weise auf den Sende- und Empfangszweig (TX, RX) der die Teilnehmeranschlußschaltungen (SLIC/SLAC) mit dem Koppelnetz der Fernsprechvermittlungsstelle verbindenden wenigstens einen Vierdraht-Zeitmultiplex-Leitung (PBS) zugegriffen wird,
daß individuell für die einzelnen Teilnehmeranschlußschaltungen (SLIC/SLAC) jeweils im Zuge einer zu einer betreffenden Teilnehmeranschlußschaltung (SLIC/SLAC) bzw. zu dem über eine Teilnehmeranschlußleitung (TL1 bis TLn) daran angeschlossenen Teilnehmerendgerät bestehenden Fernmeldeverbindung in beliebigen aber gegenüber der Länge der Abtastpulsrahmen großen Abständen ein in dem der Verbindung zugeteilten Zeitschlitz auf dem Empfangszweig (RX) der wenigstens einen Vierdraht-Zeitmultiplex-Leitung (PBS) auftretendes PCM-Wort und jeweils um eine für ein durch Reflexion an der Gabelschaltung der Teilnehmeranschlußschaltung (SLIC/ SLAC) entstehendes Echosignal maßgeblichen Laufzeit entsprechende Anzahl von Abtastpulsrahmen später während entsprechender Zeitschlitze mehrerer aufeinanderfolgender Abtastpulsrahmen auf dem Sendezweig (TX) auftretende PCM-Worte aufgenommen werden, daß ein solches vom Empfangszweig der Vierdraht-Zeitmultiplex-Leitung aufgenommenes PCM-Wort, dessen Amplitude einen vorgegebenen Schwellwert nicht erreicht,
und eine solche Gruppe aufeinanderfolgender vom Sendezweig (TX) der Vierdraht-Zeitmultiplex-Leitung (PBS) aufgenommener PCM-te, deren Leistungsmittelwert größer als ein vorgegebener Bruchteil der Leistung des genannten vom Empfangszweig (RX) aufgenommenen PCM-Wortes ist, unberücksichtigt gelassen wird, im übrigen aber aus nach einem N-maligen Zyklus aufgrund der genannten Bewertung berücksichtigten PCM-Worten bzw. Gruppen von PCM-Worten ein Summenwert von Kreuzkorrelationskoeffizienten durch die modulindividuelle Steuerung (CTR) ermittelt wird,
daß durch die modulindividuelle Steuerung (CTR) ferner geprüft wird ob zu diesem Zeitpunkt die betreffende Fernmeldeverbindung noch besteht,
und daß, sofern dies der Fall ist, je nachdem ob der Summenwert der Kreuzkorrelationskoeffizienten annähernd Null oder kleiner oder größer als ein Schwellwert ist, die Einstellung der Nachbildungsimpedanz der Gabelschaltung der betroffenen Teilnehmeranschlußschaltung (SLIC/SLAC) unverändert gelassen oder eine Veränderung zum nächst kleineren oder zum nächst größeren Wert veranlaßt wird.

2. Verfahren nach Anspruch 1,
**dadurch gekennzeichnet,**
daß erst nach Abwicklung der genannten Prozeduren mit der Aufnahme und Verarbeitung von auf eine weitere aufgebaute Fernsprechverbindung bezogenen PCM-Worten begonnen wird.

3. Verfahren nach Anspruch 1 oder 2,
**dadurch gekennzeichnet,**
daß die Schwellenbewertung der PCM-Worte durch die programmierbare Schnittstelle (CPI) bewirkt wird und daß diese auch die eventuelle Einspeicherung der PCM-Worte veranlaßt.

4. Verfahren nach einem der Ansprüche 1 bis 3,
**dadurch gekennzeichnet,**
daß die jeweils ermittelten gültigen Werte für die Nachbildungsimpedanzen durch die modulindividuelle Steuerung (CTR) gespeichert und auf Aufforderung durch eine übergeordnete Steuerung hin an diese gemeldet und dann durch diese zur Anzeige gebracht werden.

5. Schaltungsanordnung zur Einstellung der Teilnehmerleitungs-Nachbildungsimpedanz von programmierbaren Gabelschaltungen für den Zweidraht-/Vierdrahtübergang, die Bestandteil von in einem Teilnehmeranschlußmodul einer digitalen Zeitmultiplex-Fernmelde-Vermittlungsstelle zusammengefaßten und unter dem Steuereinfluß einer modulindividuellen Steuerung (CTR) stehenden Teilnehmeranschlußschaltungen sind, wobei die Teilnehmeranschlußschaltungen in einen ersten Teil (SLiC), in dem die

EP 0 286 835 B1

Funktionen Speisung, Überspannungsschutz, Rufeinspeisung, Signalisierung, Überwachung und Prüfung realisiert sind und in einen zweiten Teil (SLAC) gegliedert sind, in dem die Funktionen Zweidraht-Vierdrahtübergang, Analog-Digital-Wandlung bzw. Digital-Analog-Wandlung, Filterung und adaptive Nachbildungsimpedanz realisiert sind,

**dadurch gekennzeichnet,**

daß sie eine programmierbare Schnittstellenschaltung (CPI) aufweist, die mit einer Ablaufsteuerung (AST) versehen ist, durch die, angereizt durch die modulindividuelle Steuerung die Abfrage von auf dem Empfangszweig (RX) und dem Sendezweig (TX) der Vierdraht-Zeitmultiplex-Leitung (PBS) auftretenden PCM-Worte vorgenommen wird,

sowie einen Speicher (Sp) enthält, der diese PCM-Worte aufnimmt und sie auf eine Aufforderung durch die modulindividuelle Steuerung (CTR) hin an diese weitergibt.

6. Schaltungsanordnung zur Einstellung der Teilnehmerleitungs-Nachbildungsimpedanzen von programmierbaren Gabelschaltungen, für den Zweidraht-/Vierdrahtübergang, die Bestandteil von in einem Teilnehmeranschlußmodul einer digitalen Zeitmultiplex-Fernmelde-Vermittlungsstelle zusammengefaßten und unter dem Steuereinfluß einer modulindividuellen Steuerung (CTR) stehenden Teilnehmeranschußschaltungen sind, wobei die Teilnehmeranschlußschaltungen in einen ersten Teil (SLiC), in dem die Funktionen Speisung, Überspannungsschutz, Rufeinspeisung, Signalisierung, Überwachung und Prüfung realisiert sind und in einen zweiten Teil (SLAC) gegliedert sind, in dem die Funktionen Zweidraht-Vierdraht-Übergang, Analog-Digital-Wandlung bzw. Digital-Analog-Wandlung, Filterung und adaptive Nachbildungsimpedanz realisiert sind,

**dadurch gekennzeichnet,**

die zweiten Teile der Teilnehmeranschlußschaltungen (SLAC) eine Ablaufsteuerung enthalten, durch die angereizt durch die modulindividuelle Steuerung (CTR) die Abfrage von auf dem Empfangszweig (RX) und dem Sendezweig (TX) der Vierdraht-Zeitmultiplexleitung (PBS) aufgenommenen PCM-Worte vorgenommen wird, sowie einen Speicher enthalten, der diese PCM-Worte aufnimmt und sie auf eine Aufforderung durch die modulindividuelle Steuerung (CTR) hin an diese weitergibt.

## Claims

1. Method for setting the subscriber line balancing impedance of programmable hybrid circuits for the two-wire/four-wire transition, which are part of subscriber line interface circuits (SLIC/SLAC) which are combined in a subscriber line interface module of a digital time-division multiplex telecommunication exchange and are subject to the controlling influence of a module-individual controller (CTR), using a device for implementing an adjustable balancing impedance, characterised in that the module-individual controller (CTR) accesses the transmitting and receiving branch (TX, RX) of the at least one four-wire time-division multiplex line (PBS) connecting the subscriber line interface circuits (SLIC/SLAC) to the switching network of the telephone exchange via a programmable interface circuit (CPI), in such a manner that individually for the individual subscriber line interface circuits (SLIC/SLAC), in each case in the course of a telecommunication connection existing to a relevant subscriber line interface circuit (SLIC/SLAC) or to the subscriber terminal device connected to it via a subscriber line (TL1 to TLn), at arbitrary intervals which, however, are long with respect to the length of the sampling pulse frames, a PCM word occurring on the receiving branch (RX) of the at least one four-wire time-division multiplex line (PBS) in the time slot allocated to the connection is received and, in each case later by a number of sampling pulse frames corresponding to a delay time determining for an echo signal produced by reflection at the hybrid circuit of the subscriber line interface circuit (SLIC/SLAC), PCM words occurring during corresponding time slots of a plurality of successive sampling pulse frames on the transmitting branch (TX) are received, in that such a PCM word received by the receiving branch of the four-wire time-division multiplex line, the amplitude of which word does not reach a predetermined threshold value, and such a group of successive PCM words received from the transmitting branch (TX) of the four-wire time-division multiplex line (PBS), the mean power value of which is greater than a predetermined fraction of the power of the said PCM word received by the receiving branch (RX), are not taken into consideration, otherwise, however, a sum value of cross-correlation coefficients is determined by the module-individual controller (CTR) from PCM words or groups of PCM words taken into consideration on the basis of the said evaluation after an N-fold cycle, in that the module-individual controller (CTR) also checks whether the relevant telecommunication connection still exists at this time, and in that, if this is so, the setting of the balancing impedance of the hybrid circuit of the subscriber line interface circuit (SLIC/SLAC) concerned is left unchanged or a change to the next lower or to the

7

next higher value is initiated depending on whether the sum value of the cross-correlation coefficients is approximately zero or less than or greater than a threshold value.

2. Method according to Claim 1, characterised in that the reception and processing of PCM words related to a further established telephone connection is not begun until the said procedures have been completed.

3. Method according to Claim 1 or 2, characterised in that the threshold evaluation of the PCM words is effected by the programmable interface (CPI) and in that the latter also initiates the possible storage of the PCM words.

4. Method according to one of Claims 1 to 3, characterised in that the valid values in each case determined for the balancing impedances are stored by the module-individual controller (CTR) and are signalled to the latter by a higher-level controller on request and are then displayed by the latter.

5. Circuit arrangement for setting the subscriber line balancing impedance of programmable hybrid circuits for the two-wire/four-wire transition, which are part of subscriber line interface circuits which are combined in a subscriber line interface module of a digital time-division multiplex telecommunication exchange and are subject to the controlling influence of a module-individual controller (CTR), the subscriber line interface circuits being divided into a first part (SLIC) in which the functions of power feeding, overvoltage protection, ringing, signalling, monitoring and testing are implemented, and into a second part (SLAC) in which the functions of two-wire/four-wire transition, analog/ digital conversion and digital/analog conversion, filtering and adaptive balancing impedance are implemented, characterised in that it exhibits a programmable interface circuit (CPI) which is provided with a sequence controller (AST) by means of which, activated by the module-individual controller, PCM words occurring on the receiving branch (RX) and the transmitting branch (TX) of the four-wire time-division multiplex line (PBS) are interrogated, and contains a memory (SP) which receives these PCM words and forwards them to the module-individual controller (CTR) following a request by the latter.

6. Circuit arrangement for setting the subscriber line balancing impedance of programmable hybrid circuits for the two-wire/four-wire transition, which are part of subscriber line interface circuits which are combined in a subscriber line interface module of a digital time-division multiplex telecommunication exchange and are subject to the controlling influence of a module-individual controller (CTR), the subscriber line interface circuits being divided into a first part (SLIC) in which the functions of power feeding, overvoltage protection, ringing, signalling, monitoring and testing are implemented, and into a second part (SLAC) in which the functions of two-wire/four-wire transition, analog/digital conversion and digital/analog conversion, filtering and adaptive balancing impedance are implemented, characterised in that the second parts of the subscriber line interface circuits (SLAC) contain a sequence controller by means of which, activated by the module-individual controller (CTR), PCM words received on the receiving branch (RX) and the transmitting branch (TX) of the four-wire time-division multiplex line (PBS) are interrogated, and contain a memory which receives these PCM words and forwards them to the module-individual controller (CTR) following a request by the latter.

**Revendications**

1. Procédé pour régler l'impédance équivalente d'une ligne d'abonné de termineurs programmables pour la jonction bifilaire/quadrifilaire, qui fait partie de circuits de raccordement d'abonnés (SLIC/SLAC) qui sont réunis dans un module de raccordement d'abonnés d'un central numérique de télécommunications à multiplexage temporel et sont placés sous la commande d'une unité de commande (CTR) prévue individuellement pour chaque module, moyennant l'utilisation d'un dispositif pour former d'une manière réglable l'impédance équivalente, caractérisé par le fait que l'unité de commande (CTR) prévue individuellement pour chaque module accède, par l'intermédiaire d'un circuit d'interface programmable (CPI), à la branche d'émission et de réception (TX,RX) d'au moins une ligne quadrifilaire à multiplexage temporel (PBS), qui relie les circuits de raccordement d'abonnés (SLIC/SLAC) au champ de couplage du central téléphonique, que d'une manière individuelle pour les différents circuits de raccordement d'abonnés (SLIC/SLAC), respectivement au cours d'une liaison de télécommunications existante, qui aboutit à un circuit de raccordement d'abonnés (SLIC/SLAC) considéré ou au poste terminal d'abonné qui est raccordé à ce circuit par l'intermédiaire d'une ligne d'abonné (TL1 à TLn), un mot MIC, qui apparaît dans le créneau temporel affecté à la liaison, dans la branche de réception (RX) d'au moins une ligne quadrifilaire à multiplexage temporel (PBS) est reçu à des intervalles quelconques, mais longs par rapport à la durée de la trame d'impulsions d'échantillonnage, et que des mots MIC, qui apparaissent dans la branche d'émission (TX), sont reçus avec un retard constitué par un nombre de trames d'impulsions d'échantillonnage correspondant au temps de propagation déterminant pour un signal d'écho apparu par réflexion au niveau du termineur du circuit de raccordement d'abonné (SLIC/SLAC),

qu'un tel mot MIC reçu par la branche de réception de la ligne quadrifilaire de multiplexage temporel et dont l'amplitude n'atteint pas une valeur de seuil prédéterminée, et

un tel groupe de mots MIC successifs, reçus par la branche d'émission (TX) de la ligne quadrifilaire à multiplexage temporel (PBS) et dont la puissance moyenne est supérieure à une fraction prédéterminée de la puissance dudit mot MIC reçu par la branche de réception (RX), ne sont pas pris en compte, mais par ailleurs une valeur somme de coefficients de corrélation croisée est déterminée par l'unité de commande (CTR) prévue individuellement pour chaque module, à partir de mots MIC ou de groupes de mots MIC, pris en compte après N cycles sur la base de ladite évaluation,

que l'unité de commande (CTR) prévue individuellement pour chaque module vérifie en outre si, à cet instant, la liaison considérée de télécommunications existe encore, et

que, dans la mesure où c'est le cas, selon que la valeur de la somme des coefficients de corrélation croisée est presque nulle ou inférieure ou supérieure à une valeur seuil, le réglage de l'impédance équivalente du termineur du circuit de raccordement d'abonné considéré (SLIC/SLAC) reste inchangé ou qu'une modification en direction d'une valeur immédiatement inférieure ou immédiatement supérieure est déclenchée.

2. Procédé suivant la revendication 1, caractérisé par le fait que c'est seulement après le déroulement desdites procédures que commence l'enregistrement et le traitement de mots MIC associés à une autre liaison téléphonique établie.

3. Procédé suivant la revendication 1 ou 2, caractérisé par le fait que l'évaluation du seuil des signaux MIC est exécutée par l'interface programmable (CPI) et que cette dernière déclenche également la mémorisation éventuelle des mots MIC.

4. Procédé suivant l'une des revendications 1 à 3, caractérisé par le fait que les valeurs valables respectivement déterminées pour les impédances équivalentes sont mémorisées au moyen de l'unité de commande (CTR) prévue pour chaque module et, sur demande, sont signalées à cette unité de commande par l'intermédiaire d'une unité de commande de rang supérieur et sont affichées par cette dernière.

5. Montage pour régler l'impédance équivalente de lignes d'abonnés de termineurs programmables pour la jonction bifilaire/quadrifilaire, qui font partie de circuits de raccordement d'abonnés réunis dans un module de raccordement d'abonnés d'un central numérique de télécommunications à muliplexage temporel et sont placés sous la commande d'une unité de commande (CTR) prévue individuellement pour chaque liaison, les circuits de raccordement d'abonnés étant subdivisés en une première partie (SLIC) dans laquelle les fonctions d'alimentation, de protection contre les surtensions, d'introduction d'appels, de signalisation, de contrôle et de test, sont réalisées, et en une seconde partie (SLC), dans laquelle les fonctions jonctions bifilaires-quadrifilaires, conversion analogique-numérique ou conversion numérique-analogique, filtrage et impédance équivalente adaptative sont réalisées, caractérisé par le fait

qu'il comprend un circuit d'interface programmable (CPI), qui comporte une unité de commande d'exécution (AST) qui réalise, d'une manière déclenchée par l'unité de commande prévue individuellement pour chaque module, l'interrogation de mots MIC apparaissant dans la branche de réception (RX) et dans la branche d'émission (TX) de la ligne quadrifilaire à multiplexage temporel (PBS), et

contient une mémoire (Sb), qui reçoit ces mots MIC et les retransmet à l'unité de commande (CTR) prévue individuellement pour chaque module, lors d'une demande effectuée par cette unité.

6. Montage pour régler l'impédance équivalente de lignes d'abonnés de termineurs programmables pour la jonction bifilaire/quadrifilaire, qui font partie de circuits de raccordement d'abonnés réunis dans un module de raccordement d'abonnés d'un central numérique de télécommunications à multiplexage temporel et sont placés sous la commande d'une unité de commande (CTR) prévue individuellement pour chaque liaison, les circuits de raccordement d'abonnés étant subdivisés en une première partie (SLIC) dans laquelle les fonctions d'alimentation, de protection contre les surtensions, d'introduction d'appels, de signalisation, de contrôle et de test, sont réalisées, et en une seconde partie (SLC), dans laquelle les fonctions jonctions bifilaires-quadrifilaires, conversion analogique-numérique ou conversion numérique-analogique, filtrage et impédance équivalente adaptative sont réalisées,
caractérisé par le fait
que les secondes parties des circuits de raccordement d'abonnés (SLAC) contiennent une unité de commande d'exécution qui réalise, d'une manière déclenchée par l'unité de commande (CTR) prévue individuellement pour chaque module, l'interrogation de mots MIC reçus dans la branche de réception (RX) et dans la branche d'émission (TX) de la ligne quadrifilaire à multiplexage temporel (PBS), et contiennent une mémoire, qui reçoit ces mots MIC et les retransmet à l'unité de commande (CTR) prévue individuellement pour chaque module, lors d'une demande présentée par une telle unité.

## FIG 1

## FIG 2

# FIG 3